Europäisches Patentamt

European Patent Office

Office européen des brevets

(19)

(11) Veröffentlichungsnummer: **0 501 017 A1**

# EUROPÄISCHE PATENTANMELDUNG

(12)

(21) Anmeldenummer: **91119199.7**

(22) Anmeldetag: **12.11.91**

(51) Int. Cl.5: **B62D 5/04**

(30) Priorität: **09.02.91 DE 4104051**
**29.06.91 DE 4121666**

(43) Veröffentlichungstag der Anmeldung:
**02.09.92 Patentblatt 92/36**

(84) Benannte Vertragsstaaten:
**DE FR GB IT**

(71) Anmelder: **ROBERT BOSCH GMBH**
**Postfach 30 02 20**
**W-7000 Stuttgart 30(DE)**

(72) Erfinder: **Schlagmueller, Walter, Ing.**
**Frankenstrasse 39**
**W-7141 Schwieberdingen(DE)**
Erfinder: **Ahner, Peter, Dipl.-Ing.**
**Wiesenstrasse 25**
**W-7140 Ludwigsburg-Ossweil(DE)**

(54) **Elektromotorische Servolenkung.**

(57) Es wird eine elektromotorische Servolenkung vorgeschlagen, bei der die Kupplung im Ölbad läuft und die Beläge der Kupplung mit einer Reibfläche versehen sind, deren Reibwert, der sich aus dem Quotienten Reibkraft durch Anpreßkraft bzw. Normalkraft ergibt, im Bereich niedriger Flächenpressung derart von der Flächenpressung abhängig ist, daß die entsprechende Verstärkungskennlinie (2) einen nichtlinearen Verlauf aufweist.

FIG.2

EP 0 501 017 A1

Stand der Technik

Die Erfindung geht aus von einer elektromotorischen Servolenkung nach der Gattung des Hauptanspruchs. Eine derartige Servolenkung ist älter angemeldet durch die deutsche Anmeldung P 39 33 771.5.

Beim Gegenstand dieser älteren Anmeldung handelt es sich um eine Servolenkung für Kraftfahrzeuge für den Parkiergeschwindigkeitsbereich (Park-Servo), mit einem Untersetzungsgetriebe zwischen einem Servomotor und der Lenksäule bzw. dem zur mechanischen Radverstellung weiterführenden Antrieb. Dabei wird mindestens eine Kupplungsbacke so angeordnet, daß sie eine Antriebsverbindung vom Servomotorantrieb zur Lenkgetriebeseite der Lenksäule dann herstellt, wenn bei manueller Momenteneinleitung am Lenkrad ein mit der Lenkradseite der Lenksäule verbundener Mitnehmer den erforderlichen Kupplungsanpreßdruck durch mechanische Einwirkung auf die mindestens eine Kupplungsbacke erzeugt, wobei unter der Kupplungseinwirkung stehende Zahnräder als Hohlzahnräder ausgebildet sind, die auf einer mit dem Antriebslenksäulenbereich drehfest verbundenen Kupplungsnabe gelagert sind.

Gemäß der Erfindung soll nun eine solche Servolenkung so verbessert werden, daß durch eine Einflußnahme auf die Kennlinie der Kupplung eine herkömmliche Kupplung den speziellen Erfordernissen einer Servolenkung angepaßt werden kann.

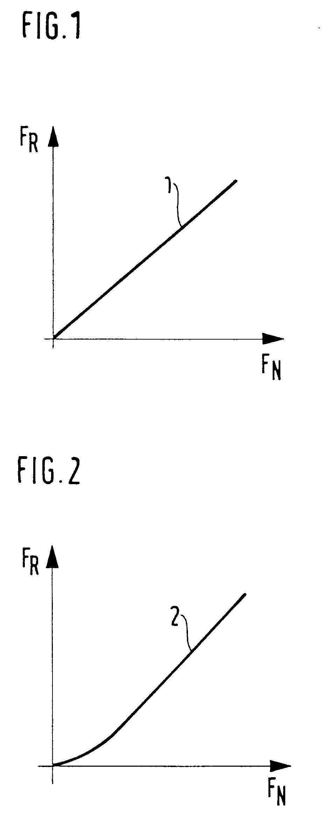

Bei elektromotrischen Servolenkungen für Kraftfahrzeuge werden Kupplungen verwendet, deren Gehäuse mit Öl gefüllt sind. Dadurch laufen nicht nur die Kupplungszahnräder im Ölbad, sondern auch die Reibbeläge der Kupplung. Solche Reibbeläge werden üblicher Weise genutet. Bei einer derartigen bekannten Kupplungsbauart ist dann die Reibkraft $F_R$ proportional der Normalkraft $F_N$. Ein entsprechender Kurvenverlauf einer Verstärkungskennlinie 1 ist in einem in der Figur 1 dargestellten Diagramm gezeigt.

Gemäß der Erfindung ist nun der im Ölbad befindliche Kupplungsbelag beispielsweise ungenutet, also mit einer durchweg unterbrechungslosen Reibfläche versehen oder er hat eine andere geeignete Oberfläche besonderer Ausführung, die so gestaltet sein muß, daß sich der Reibwert, definiert als Quotient aus Reibkraft und Anpreßkraft (Normalkraft), in seinem Verlauf über der Anpreßkraft in einer gewünschten Art beeinflussen läßt. Mit einem solchen Kupplungsbelag ergibt sich eine Verstärkungskennlinie 2, wie sie in der Figur 2 dargestellt ist. Es ist zu erkennen, daß im Bereich niedriger Flächenpressung der Reibwert von einer Geraden abweicht, indem er deutlich "durchhängt". Mit einer derart arbeitenden Kupplung kann dann die Verstärkung der Servokraft den Erfordernissen einer Servolenkung besser angepaßt werden, indem die Kupplung weicher greift. Ein solches weiches Greifen der Kupplung ist besonders bei niedrigen Lenkmomenten (Geradeausfahrt, bzw. höherer Fahrgeschwindigkeit) erstrebenswert, weil dadurch ein besserer Fahrbahnkontakt vermittelt wird.

**Patentansprüche**

1. Elektromotorische Servolenkung für Kraftfahrzeuge, mit einem Getriebe zwischen einem Servomotor und der Lenksäule bzw. dem zur mechanischen Radverstellung weiterführenden Abtrieb und mit einer ölgefüllten Kupplung zur Herstellung einer Antriebsverbindung vom Servomotor zur Lenksäule bzw. Abtrieb, dadurch gekennzeichnet, daß zur Beeinflussung des Reibwertes der Kupplung durch die Flächenpressung zwischen der mindestens einen Kupplungsbacke und einer Gegenfläche an den Rädern der Kupplung ein Kupplungsbelag mit einer derart gestalteten Reibfläche versehen ist, daß der Verlauf des Reibwerts (Reibwert = Reibkraft/Anpreßkraft(Normalkraft)) über der Flächenpressung veränderbar ist.

2. Elektromotorische Servolenkung nach Anspruch 1, dadurch gekennzeichnet, daß eine Verstärkungskennlinie (2) der Kupplung einen nichtlinearen Verlauf aufweist.

3. Elektromotorische Servolenkung nach Anspruch 1 oder 2, dadurch gekennzeichnet, daß der Kupplungsbelag eine durchweg unterbrechungslose Reibfläche hat.

## FIG.1

## FIG.2

Europäisches
Patentamt

**EUROPÄISCHER RECHERCHENBERICHT**

Nummer der Anmeldung

EP    91 11 9199

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 925 214 (VOLKSWAGEN) <br> * Anspruch 1; Abbildungen * <br> --- | 1 | B62D5/04 |
| A | EP-A-0 249 488 (MITSUBISHI DENKI) <br> * Spalte 6, Zeile 54 - Spalte 7, Zeile 52; Abbildungen 4,7 * <br> --- | 1 | |
| A | PATENT ABSTRACTS OF JAPAN <br> vol. 11, no. 34 (M-558)31. Januar 1987 <br> & JP-A-61 202 973 ( KOYO SEIKO ET AL. ) 8. September 1986 <br> * Zusammenfassung * <br> --- | 1 | |
| A | EP-A-0 343 693 (MITSUBISHI DENKI) <br> * Spalte 18, Zeile 31 - Zeile 49; Abbildungen 3,4 * <br><br> ----- | 1 | |
| | | | **RECHERCHIERTE SACHGEBIETE (Int. Cl.5)** <br><br> B62D |

Der vorliegende Recherchenbericht wurde für alle Patentansprüche erstellt

| Recherchenort | Abschlußdatum der Recherche | Prüfer |
|---|---|---|
| BERLIN | 10 JUNI 1992 | BROYDE M. |